# EUROPÄISCHE PATENTSCHRIFT

(11) **EP 2 932 822 B1**
(45) Veröffentlichungstag und Bekanntmachung des Hinweises auf die Patenterteilung: **31.10.2018**
(21) Anmeldenummer: 15163222.1
(22) Anmeldetag: 10.04.2015
(51) Int. Cl.: A01F 29/22, A01D 75/08

(54) **MESSERSCHÄRFEINRICHTUNG**
KNIFE SHARPENING DEVICE
DISPOSITIF AIGUISEUR DE COUTEAU

(30) Priorität: 16.04.2014 DE 102014105449
(43) Veröffentlichungstag der Anmeldung: 21.10.2015
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A1- 1 621 065
- DE-A1-102009 032 261
- DE-U1-202004 004 133

## Beschreibung

Die Erfindung betrifft eine Messerschärfeinrichtung für ein Schneidwerk einer landwirtschaftlichen Erntemaschine wie z.B. einem Ladewagen sowie eine landwirtschaftliche Erntemaschine.

DE 10 2009 032 261 A1 offenbart eine Erntemaschine, insbesondere in Form eines Ladewagens oder einer Ballenpresse, mit einer Aufnahmevorrichtung zum Aufnehmen von Erntegut vom Boden, einem an die Aufnahmevorrichtung anschließenden Förderkanal, der in einen Erntegutspeicher und/oder eine Verarbeitungskammer, insbesondere Pressenkammer, führt, einer Schneidvorrichtung mit mehreren Messern zum Zerschneiden des von einem Förderer durch den Förderkanal geförderten Ernteguts, sowie einer Schleifvorrichtung zum Schleifen der Messer, die zumindest einen Schleifer in Form einer Schleifscheibe, eine Schleiferführung sowie einen Stellantrieb für den Schleifer umfasst.

Aus DE 20 2004 004 133 U1 ist z.B. eine Messerschärfeinrichtung für ein Schneidwerk einer als Ladewagen ausgebildeten landwirtschaftlichen Erntemaschine bekannt, wobei das Schneidwerk eine Vielzahl von länglichen Schneidmessern umfasst, die jeweils eine sich längs daran in einer bestimmten Längskontur erstreckende Messerschneide haben. Die Messerschärfeinrichtung weist eine rotativ antreibbare Schleifscheibe und eine Führungseinrichtung auf, an welcher die Schleifscheibe geführt ist, so dass sie seitlich an der Messerschneide eines jeweiligen der Schneidmesser in Schleifeingriff bringbar ist und unter Nachvollziehen der Längskontur der Messerschneide hin-und-her-verfahrbar ist.

Diese Messerschärfeinrichtung weist allerdings einige Nachteile hinsichtlich ihrer Betriebseigenschaften auf. Durch den Schleifprozess kann in der Messerschärfeinrichtung bzw. im Schneidwerk Funkenflug entstehen, welcher eine nicht unerhebliche Brandgefahr mit sich bringt. Zudem kann sich durch die Temperaturbelastung beim Trockenschliff die Messerschneide bläulich verfärben, was ein Hinweis auf ein Ausglühen der Messerschneide und damit auf eine Reduzierung von deren Härte ist. Außerdem könnte sich bei Verschmutzung der Schneidmesser die Schleifscheibe mit dem Schmutz zusetzen bzw. zuschmieren, wodurch der Schleifabtrag reduziert und damit der Schärfprozess beeinträchtigt werden würde.

Der Erfindung liegt die daher Aufgabe zugrunde, eine hinsichtlich ihrer Betriebseigenschaften verbesserte Messerschärfeinrichtung für ein Schneidwerk einer landwirtschaftlichen Erntemaschine bereitzustellen.

Dies wird mit einer Messerschärfeinrichtung gemäß Anspruch 1 erreicht. Weiterbildungen der Erfindung sind in den abhängigen Ansprüchen definiert.

Gemäß der Erfindung wird eine Messerschärfeinrichtung für ein Schneidwerk einer landwirtschaftlichen Erntemaschine wie einem Ladewagen oder eine Ballenpresse bereitgestellt, wobei das Schneidwerk mindestens ein längliches Schneidmesser umfasst, das eine sich längs daran mit einer bestimmten Längskontur erstreckende Messerschneide hat. Die erfindungsgemäße Messerschärfeinrichtung weist mindestens ein Abziehmittel und eine Führungseinrichtung auf, an welcher das mindestens eine Abziehmittel geführt ist, so dass eine Abziehschneide des Abziehmittels seitlich an der Messerschneide des Schneidmessers in Schneideingriff bringbar ist und unter Nachvollziehen der Längskontur der Messerschneide verfahrbar ist.

Vorzugsweise ist die Abziehschneide der Messerschärfeinrichtung auf einer Halterung - wie beispielsweise einem, bei Werkzeugmaschinen bekannten, Drehmeißel - angeordnet. Im Zusammenhang mit der vorliegenden Erfindung wird eine solche Halterung nachfolgend auch als Abziehmeißel bezeichnet. Die Halterung und die Abziehschneide können dabei aus einem Teil bestehen, wenn beispielsweise ein Schnellarbeitsstahl (HSS) als Schneidenmaterial verwendet wird. Ebenso ist es möglich so genannte Schneidplatten, insbesondere Wendeschneidplatten, zu verwenden, die auf einer Halterung befestigt werden. Solche Schneidplatten sind aus dem Bereich der Werkzeugmaschinen und der Zerspantechnik allgemein bekannt und können aus hartmetallischen oder oxidkeramischen Werkstoffen bestehen.

Im Zusammenhang mit der vorliegenden Erfindung wird vorzugsweise eine längliche keilförmig ausgebildete Schneide aus einem ausreichend harten, verschleißfesten und zähen Werkstoff als Abziehschneide vorgesehen. Eine solche Abziehschneide wird gemäß der Erfindung so seitlich an einer Messerschneide eines Schneidmessers des Schneidwerks der Erntemaschine entlang geführt, dass ein - in der Regel durch Verschleiß entstandener - Grat abgetrennt wird. Dabei kann der Grat gemäß der aus der Werkzeugmaschinen- bzw. der Zerspantechnik bekannten Definitionen mit einem negativen Spanwinkel an der Abziehschneide durch "Schaben" oder mit einem positiven Spanwinkel durch "Schneiden" abgetrennt werden.

Die Spanfläche ist demnach die Fläche am Schneidkeil, auf welcher der Span abläuft und die der entstehenden Werkstückoberfläche gegenüber liegende Fläche am Schneidkeil, wird als Freifläche bezeichnet.

Gemäß der vorliegenden Erfindung wird die Abziehschneide vorzugsweise so an einer Messerschneide des Schneidwerks entlang geführt, dass die Freifläche der Abziehschneide und die Oberfläche der Messerschneide einen Winkel einschließen, d.h. ein Freiwinkel vorhanden ist. Dadurch wird die Abziehschneide günstiger belastet und ein frühzeitiges Ausbrechen der Schneide verhindert.

Dadurch, dass gemäß der Erfindung eine Abziehschneide eines Abziehmeißels seitlich an der Messerschneide des mindestens einen Schneidmessers in Schneideingriff bringbar ist und unter Nachvollziehen der Längskontur der Messerschneide hin-und-her-verfahrbar ist, kann die Messerschneide ohne übermäßige Temperaturbelastung und damit ohne Blauschleifen (in einem sogenannten "kalten" Verfahren) und ohne Funkenflug mittels Abziehens, d.h. Entfernens eines durch Umbiegen der Schneidkante zur seitlichen Schneidfläche hin seitlich an der Messerschneide entstandenen Grates, nachgeschärft werden. Eventuell an der Messerschneide anhaftende Verschmutzungen werden dabei einfach mit abgezogen und beeinträchtigen nicht die Abtragsleistung bzw. Schneidleistung der Abziehschneide. Somit weist die erfindungsgemäße Messerschärfeinrichtung gegenüber dem Stand der Technik verbesserte Betriebseigenschaften auf.

Beim Hin-und-Her-Verfahren wird die Abziehschneide in einer Bewegungsrichtung vorzugsweise an die Messerschneide eines Schneidmessers angestellt, so dass der Grat - zumindest teilweise - abgetrennt wird und in der Zurückbewegung wird die Abziehschneide vorzugsweise von der Messerschneide abgehoben, so dass sie nicht im Eingriff mit der Messerschneide steht. Dieser Bewegungszyklus wird vorzugsweise so oft durchgeführt bis der Grat restlos entfernt wurde oder die Messerschneide eine ausreichende Schärfe aufweist.

Gemäß einer weiteren Ausführungsform der Erfindung kann eine Abziehschneide vorgesehen werden, die sowohl bei der Hin- als auch bei der Her-Bewegung in schneidendem bzw. schabendem Eingriff bleibt. Alternativ kann auch eine weitere Abziehschneide vorgesehen werden, die im Rückhub in Eingriff mit der Messerschneide gebracht wird. Durch die Nutzung beider Bewegungsrichtungen kann die Zeit für den Nachschärfvorgang weiter reduziert werden.

Gemäß einer Ausführungsform der Erfindung ist die Führungseinrichtung eingerichtet, so dass sie in dem Schneidwerk in definierter Position zu dem mindestens einen Schneidmesser angeordnet werden kann, um die Messerschneide des Schneidmessers durch entlang deren Längskontur Hin-und-Her-Verfahren der Abziehschneide des Abziehmeißels zu schärfen.

Mit anderen Worten kann die komplette Messerschärfeinrichtung (die Führungseinrichtung und der daran geführte mindestens eine Abziehmeißel) in dem Schneidwerk lagefest angeordnet werden, um den Schärfprozess durchzuführen. Dazu kann das Schneidwerk aufklappbar ausgebildet sein, so dass dessen Schneidmesser zum Schärfen zugänglich sind. Bevorzugt ist das Schneidwerk so aufklappbar ausgebildet, dass eine von einem Bodenblech des Schneidwerks definierte Schneidmulde zugänglich ist, wobei die Schneidmesser durch Schlitze im Bodenblech hindurch vorstehen können und damit zugänglich sind. Ebenso ist es möglich, die Schneidmesser durch die Schlitze im Bodenblech hindurch aus dem Schneidwerk heraus zu schwenken, um sie für das Nachschärfen zugänglich zu machen.

Die Messerschärfeinrichtung kann z.B. manuell in die geöffnete Schneidmulde eingesetzt werden, wobei die Führungseinrichtung in der Schneidmulde z.B. am Bodenblech oder den Schneidmessern fixiert wird. Bevorzugt wird die Messerschärfeinrichtung mittels einer Verfahreinrichtung in die geöffnete Schneidmulde hineingefahren, wie z.B. geschwenkt und/oder translatorisch bewegt, wobei die Führungseinrichtung der Messerschärfeinrichtung an der Verfahreinrichtung so aufgenommen ist, dass die Führungseinrichtung im Schneidwerk in definierter Position zu dem mindestens einen Schneidmesser angeordnet werden kann, um die Messerschneide des Schneidmessers durch entlang deren Längskontur Hin-und-Her-Verfahren der Abziehschneide des Abziehmeißels zu schärfen.

Gemäß einer alternativen Ausführungsform der Erfindung könnte die Messerschärfeinrichtung auch separat von dem Schneidwerk angeordnet sein, womit das mindestens eine Schneidmesser vor dem Schärfen aus dem Schneidwerk entnommen werden muss und in der Messerschärfeinrichtung fixiert werden muss, so dass das Schneidmesser in definierter Position zu der Führungseinrichtung angeordnet ist, um die Messerschneide des Schneidmessers durch entlang deren Längskontur Hin-und-Her-Verfahren der Abziehschneide des Abziehmeißels zu schärfen.

Gemäß einer weiteren Ausführungsform der Erfindung weist die Führungseinrichtung eine Führungsschienenanordnung, die eine zu der Längskontur der Messerschneide des mindestens einen Schneidmessers korrespondierende Führungsbahn definiert, und einen Führungswagen auf, der an der Führungsschienenanordnung geführt ist, so dass der Führungswagen entlang der Führungsbahn hin-und-her-verfahrbar ist, wobei der mindestens eine Abziehmeißel an dem Führungswagen gelagert ist.

Diese Ausgestaltung der Erfindung unter Kombination der Führungsschienenanordnung mit dem daran entlang der Führungsbahn geführten den mindestens einen Abziehmeißel lagernden Führungswagen stellt eine einfache und robuste Lösung zum Realisieren des unter Nachvollziehen der Längskontur der Messerschneide Hin-und-Her-Verfahrens der Abziehschneide des Abziehmeißels dar.

Gemäß noch einer Ausführungsform der Erfindung weist die Führungsschienenanordnung zwei Führungsschienen auf, die mit vorbestimmtem Abstand zueinander ausgerichtet, insbesondere deckungsgleich nebeneinander, angeordnet sind und an denen jeweils eine die Führungsbahn wiedergebende Führungskontur vorgesehen ist, wobei der Führungswagen zwischen den Führungsschienen angeordnet ist und an jeder von zwei jeweils einer der Führungsschienen zugewandten Seiten dessen eine Eingriffseinheit aufweist, die mit der angrenzenden jeweiligen Führungskontur zur Bewegungsführung in Eingriff steht.

Diese Ausgestaltung der Erfindung bietet vorteilhaft durch geeignete Auswahl der Größe des Abstandes der Führungsschienen und entsprechender Auswahl einer Breite des Führungswagens die Möglichkeit, mehrere Schneidmesser des Schneidwerks zu überspannen und diese mehreren Schneidmesser mittels mehrerer an der Führungseinrichtung geführter, insbesondere mehrerer am Führungswagen gelagerter, Abziehmeißel gleichzeitig zu schärfen. Dies reduziert vorteilhaft die zum Schärfen der Schneidmesser des Schneidwerks erforderliche Bearbeitungszeit.

Gemäß noch einer weiteren Ausführungsform der Erfindung weisen die Eingriffseinheiten jeweils zwei Eingriffselemente auf, die so angeordnet sind, dass sie entlang der Führungskontur mit vorbestimmtem Abstand voneinander jeweils mit der Führungskontur in Eingriff stehen.

Durch das Vorsehen zweier voneinander beabstandeter Eingriffselemente auf jeder Seite des Führungswagens kann dessen Bewegung entlang der z.B. bogenförmig gekrümmten Führungsbahn noch besser geführt und somit der kontinuierliche und korrekte Schneideingriff der Abziehschneide des mindestens einen Abziehmeißels optimal gewährleistet werden.

Gemäß einer Ausführungsform der Erfindung sind die Eingriffselemente in Form von drehbar am Führungswagen gelagerten jeweiligen Führungsrädern ausgebildet, wobei die Führungskontur jeder Führungsschiene einen Führungsschlitz aufweist, in den die Führungsräder zur Bewegungsführung eingreifen.

Durch die Ausgestaltung der Eingriffselemente als drehbar gelagerte Führungsräder kann vorteilhaft die beim entlang der Führungsbahn Verfahren des Führungswagens entstehende Reibung und damit der zu überwindende Widerstand reduziert werden, was die beim Schärfen aufzubringenden bzw. wirkenden Verfahrkräfte und den Verschleiß reduziert.

Gemäß einer weiteren Ausführungsform der Erfindung ist der mindestens eine Abziehmeißel beweglich an dem Führungswagen gelagert mit einer vorbestimmten Vorspannkraft in eine Arbeitsposition zum Schneideingriff mit der Messerschneide des mindestens einen Schneidmessers vorgespannt, wobei der mindestens eine Abziehmeißel aus der Arbeitsposition gegen die Vorspannkraft in eine Ausweichposition verlagerbar ist, so dass ein Ausmaß des Schneideingriffs der Abziehschneide des Abziehmeißels reduzierbar ist.

Mit dieser Ausgestaltung der Erfindung können ein zu starkes schneidendes Eingreifen der Abziehschneide des Abziehmeißels in die seitliche Schneidenfläche der Messerschneide und damit ein Blockieren der Verfahrbewegung und/oder ein durch Herausreißen von Materialpartikeln verursachtes Aufrauen der Schneidenfläche vermieden werden. Mit anderen Worten stellt die Verlagerbarkeit des Abziehmeißels eine Überlastsicherung bereit.

Gemäß noch einer weiteren Ausführungsform der Erfindung ist der mindestens eine Abziehmeißel um eine sich quer zu der Führungsbahn bzw. parallel zu jeweiligen Drehachsen der Führungsräder erstreckende Schwenkachse schwenkbar an dem Führungswagen gelagert, so dass er aus der Arbeitsposition gegen die Vorspannkraft in die Ausweichposition verlagerbar ist. Am Umkehrpunkt kann ein Stellelement vorgesehen werden, welches die Abziehschneide des Abziehmeißels in die Ausweichposition stellt und während des Rückhubs dort fixiert, so dass die Abziehschneide bei der Bewegung zurück nicht in Eingriff mit der Messerschneide kommt. Alternativ oder zusätzlich könnte auch ein Stellelement vorgesehen werden, welches eine weitere Abziehschneide für den Rückweg in Eingriff mit der Messerschneide bringt.

Die schwenkbare Lagerung des mindestens einen Abziehmeißels stellt eine einfache und robuste Lösung zum Realisieren der Verlagerbarkeit des Abziehmeißels bereit.

Gemäß einer Ausführungsform der Erfindung ist zwischen einem Gehäuse des Führungswagens und einer von der Abziehschneide abgewandten Rückseite des mindestens einen Abziehmeißels eine Druckfeder vorsehen, welche den Abziehmeißel mit ihrer Federkraft als Vorspannkraft in die Arbeitsposition drückt.

Gemäß noch einer Ausführungsform der Erfindung ist die Abziehschneide des mindestens einen Abziehmeißels von einer Hartmetall-Wendeschneidplatte gebildet, die lösbar an dem Abziehmeißel angebracht ist. Auf diese Weise lässt sich schnell und einfach eine verschlissene und dadurch stumpfe Abziehschneide durch eine neuwertige und damit scharfe Abziehschneide ersetzen. Selbstverständlich sind auch Schneidplatten aus einer Oxidkeramik einsetzbar.

Gemäß noch einer weiteren Ausführungsform der Erfindung weist die Messerschärfeinrichtung eine Antriebseinrichtung auf, die eingerichtet ist, eine Verfahrbewegung des mindestens einen Abziehmeißels motorisch anzutreiben, um dessen Abziehschneide seitlich an der Messerschneide des Schneidmessers in Schneideingriff unter Nachvollziehen der Längskontur der Messerschneide hin und her zu verfahren.

Bevorzugt ist die Antriebseinrichtung eingerichtet eine Verfahrbewegung des Führungswagens anzutreiben, so dass mit dessen Verfahren die Abziehschneide des mindestens einen Abziehmeißels seitlich an der Messerschneide des Schneidmessers in Schneideingriff unter Nachvollziehen der Längskontur der Messerschneide hin und her verfahren wird.

Bevorzugt weist die Antriebseinrichtung einen Fluidzylinder auf, dessen Kolbenstangenende (oder Zylinderende) mit dem mindestens einen Abziehmeißel antriebsverbunden ist und dessen Zylinderende (oder Kolbenstangenende) ortsfest abgestützt ist. Bevorzugt ist das ortsfest abgestützte Ende des Fluidzylinders um eine sich quer zur Führungsbahn bzw. parallel zu den Drehachsen der Führungsräder erstreckende Schwenkachse schwenkbar an der Führungsschienenanordnung, insbesondere an beiden Führungsschienen, abgestützt. Bevorzugt ist das mit dem Abziehmeißel antriebsverbundene Ende des Fluidzylinders um eine sich quer zur Führungsbahn bzw. parallel zu den Drehachsen der Führungsräder erstreckende Schwenkachse schwenkbar mit dem den wenigstens einen Abziehmeißel lagernden Führungswagen verbunden.

Gemäß einer Ausführungsform der Erfindung ist der Fluidzylinder als Hydraulikzylinder ausgebildet und lässt sich somit einfach in ein Hydrauliksystem der landwirtschaftlichen Erntemaschine einbinden.

Die Vorschubbewegung kann auch über einen Drehantrieb, wie einen Hydro- oder Elektromotor, realisiert werden, der ein Zahnrad antreibt, welches mit einer Verzahnung zusammenwirkt - beispielsweise einer Zahnstange.

Im Folgenden wird die Erfindung anhand einer bevorzugten Ausführungsform und unter Bezugnahme auf die beigefügten Figuren detaillierter beschrieben.
- Fig.1: zeigt eine perspektivische Seitenansicht einer in einer geöffneten Schneidmulde eines Schneidwerks angeordneten Messerschärfeinrichtung gemäß einer Ausführungsform der Erfindung in einer unteren Verfahrposition.
- Fig.2: zeigt eine perspektivische Draufsicht der Messerschärfeinrichtung von Fig. 1 in der unteren Verfahrposition.
- Fig.3: zeigt eine perspektivische Seitenansicht der Messerschärfeinrichtung von Fig. 1 in einer oberen Verfahrposition.

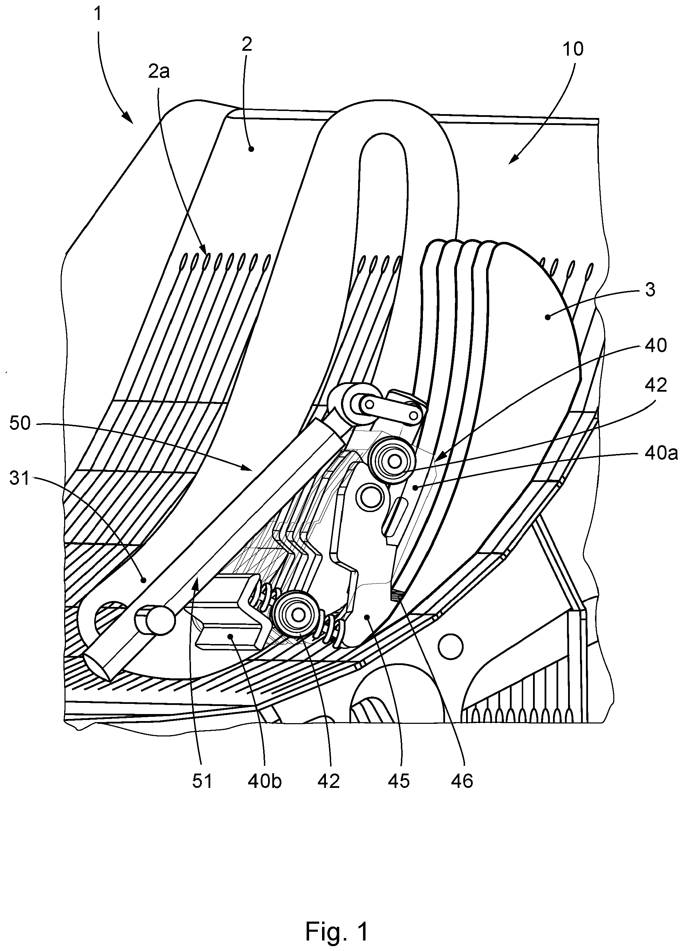

Im Folgenden wird unter Bezugnahme auf die Figuren 1 bis 3 eine gemäß einer Ausführungsform der Erfindung ausgebildete Messerschärfeinrichtung 10 für ein Schneidwerk 1 (nicht vollständig dargestellt) einer landwirtschaftlichen Erntemaschine (nicht vollständig dargestellt und nicht separat bezeichnet) beschrieben werden. Als landwirtschaftliche Erntemaschine kommen hierbei z.B. jeweils mit einem Schneidwerk versehene Ladewagen oder Ballenpressen in Betracht.

Das in den Figuren 1 bis 3 partiell dargestellte Schneidwerk 1 ist aufklappbar ausgebildet und weist eine drehbar gelagerte Fördertrommel (nicht gezeigt) für Erntegut, ein eine Mehrzahl von Durchgangschlitzen 2a aufweisendes Leitelement bzw. Bodenblech 2, das sich im nicht aufgeklappten Zustand oder Betriebszustand des Schneidwerks 1 so umfänglich entlang der Fördertrommel erstreckt, dass zwischen der Fördertrommel und dem Leitelement 2 ein Förderkanal bzw. eine Schneidmulde für das Erntegut gebildet ist, und eine Mehrzahl von länglichen Schneidmessern 3 auf.

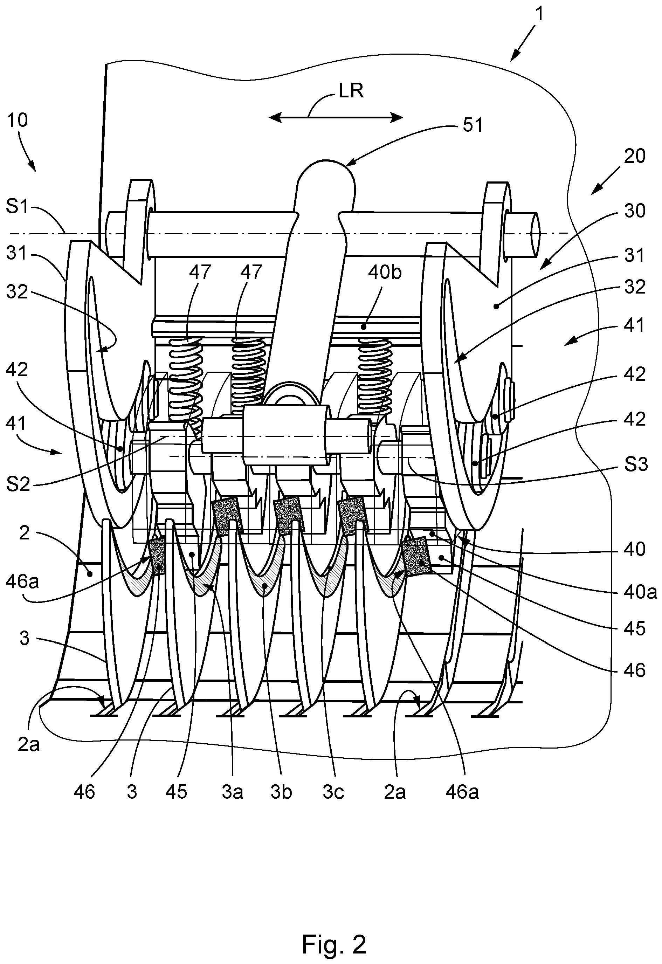

Die Schneidmesser 3 sind in einer Längsrichtung LR der Fördertrommel mit jeweiligem Abstand voneinander nebeneinanderliegend in einer Reihe angeordnet, so dass sie die gesamte Arbeitslänge der Fördertrommel abdecken bzw. nutzen. Die Schneidmesser 3 weisen jeweils eine sich längs daran in einer bestimmten hier bogenförmig gekrümmten Längskontur erstreckende Messerschneide 3a (siehe Fig. 2) auf.

Die Schneidmesser 3 sind an einer nicht gezeigten gemeinsamen Schwenkachse, die sich in einer Schneidwerksmechanik auf einer der Fördertrommel abgewandten Seite des Leitelements 2 befindet, schwenkbar gelagert, so dass sie einzeln, in Gruppen oder alle gemeinsam jeweils zwischen einer Schneidposition und einer Parkposition verlagerbar sind.

In der Schneidposition erstrecken sich die Schneidmesser 3 jeweils von der Schwenkachse aus durch einen jeweiligen der Durchgangsschlitze 2a hindurch in den Förderkanal bzw. die Schneidmulde für das Erntegut hinein, um unter Zusammenwirkung mit der Fördertrommel das Erntegut zu zerschneiden. In der Parkposition sind die Schneidmesser 3 aus dem Förderkanal bzw. der Schneidmulde herausgeschwenkt und befinden sich auf der der Fördertrommel abgewandten Seite des Leitelements 2. In den Darstellungen der Figuren 1 bis 3 befinden sich fünf zueinander benachbarte Schneidmesser 3 in der Schneidposition, wohingegen sich die anderen Schneidmesser (nicht sichtbar) in der Parkposition befinden.

Das Schneidwerk 1 ist so aufklappbar ausgebildet, dass im aufgeklappten Zustand das Leitelement 2 mitsamt der Schneidwerksmechanik und den darin gelagerten Schneidmessern 3 von der Fördertrommel weggeschwenkt sind, so dass die vom Leitelement 2 gebildete Schneidmulde zugänglich ist. Werden nun im aufgeklappten Zustand des Schneidwerks 1 Schneidmesser 3 in die Schneidposition geschwenkt, so stehen die am Schneidprozess beteiligten vorderen Abschnitte dieser Schneidmesser 3 durch die Durchgangsschlitze 2a im Leitelement 2 hindurch vor und sind damit für eine Schärfbearbeitung zugänglich.

Die Messerschärfeinrichtung 10 weist eine Führungseinrichtung 20 mit einer Führungsschienenanordnung 30 und einem Führungswagen 40 auf. Die Führungsschienenanordnung 30 definiert eine zu der Längskontur der Messerschneide 3a der Schneidmesser 3 korrespondierende Führungsbahn, wobei der Führungswagen 40 an der Führungsschienenanordnung 30 geführt ist, so dass der Führungswagen 40 entlang der Führungsbahn hin-und-her-verfahrbar ist.

Genauer weist die Führungsschienenanordnung 30 zwei identische plattenförmige Führungsschienen 31 auf, die mit vorbestimmtem Abstand voneinander deckungsgleich nebeneinander angeordnet sind und an denen jeweils eine die Führungsbahn wiedergebende Führungskontur in Form eines sich bogenförmig erstreckenden Führungsschlitzes 32 vorgesehen ist.

Der Führungswagen 40 ist zwischen den beiden Führungsschienen 31 angeordnet, so dass die Führungsschienen 31 den Führungswagen 40 wangenartig zwischen sich aufnehmen. An jeder von zwei jeweils einer der Führungsschienen 31 zugewandten Seiten des Führungswagen 40 ist eine Eingriffseinheit 41 vorgesehen, die mit der angrenzenden jeweiligen Führungskontur in Form des Führungsschlitzes 32 zur Bewegungsführung in Eingriff steht.

Genauer weist jede Eingriffseinheit 41 zwei Eingriffselemente in Form von drehbar an einem Gehäuse 40a des Führungswagens 40 gelagerten jeweiligen Führungsrädern 42 auf, die so angeordnet sind, dass sie entlang des Führungsschlitzes 32 mit vorbestimmtem Abstand voneinander jeweils in den Führungsschlitz 32 eingreifen.

Die Messerschärfeinrichtung 10 weist außerdem eine Antriebseinrichtung 50 auf, die eingerichtet ist, eine Hin-und-Her-Verfahrbewegung des Führungswagens 40 entlang der von den Führungsschlitzen 32 definierten Führungsbahn linearmotorisch anzutreiben. An den Führungsschlitzen 32 könnte alternativ eine Verzahnung vorgesehen werden, in welcher sich ein Zahnrad abwälzt, das durch einen Hydro- oder Elektromotor angetrieben wird.

Gemäß dieser Ausführungsform der Erfindung weist die Antriebseinrichtung 50 einen als Hydraulikzylinder ausgebildeten Fluidzylinder 51 auf. Ein Zylinderende des Fluidzylinders 51 ist dabei um eine sich quer zur Führungsbahn bzw. parallel zu Drehachsen der Führungsräder 42 erstreckende erste Schwenkachse S1 schwenkbar an den beiden Führungsschienen 31 der Führungsschienenanordnung 30 abgestützt. Ein Kolbenstangenende ist um eine sich quer zur Führungsbahn bzw. parallel zu den Drehachsen der Führungsräder 42 erstreckende zweite Schwenkachse S2 schwenkbar mit dem Gehäuse 40a des Führungswagens 40 verbunden (in Fig. 2 ist aus Übersichtlichkeitsgründen die Anbindung des Kolbenstangenendes an dem Gehäuse 40a weggelassen).

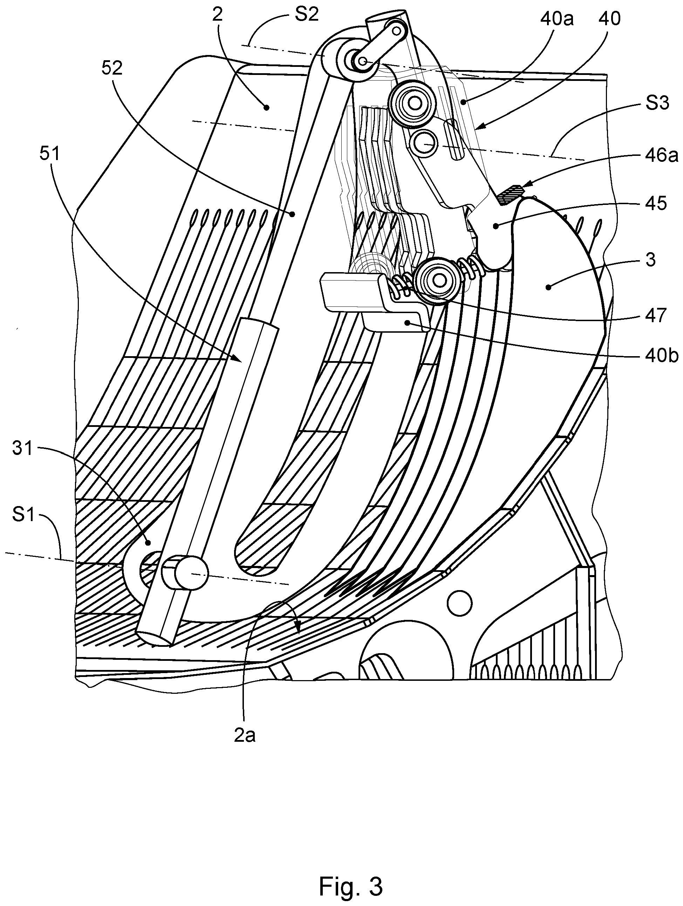

Durch entsprechend gesteuerte Beaufschlagung des Fluidzylinders 51 mit Hydraulikfluid aus z.B. einem Hydraulikkreis der Erntemaschine kann somit eine Kolbenstange 52 des Fluidzylinders 51 ausgefahren werden, wodurch der Führungswagen 40 entlang der von den Führungsschlitzen 32 definierten Führungsbahn in eine in Fig. 3 gezeigte obere Verfahrposition gefahren wird, und die Kolbenstange 52 des Fluidzylinders 51 eingefahren werden, wodurch der Führungswagen 40 entlang der von den Führungsschlitzen 32 definierten Führungsbahn in eine in Fig. 1 und in Fig. 2 jeweils gezeigte untere Verfahrposition gefahren wird. Auf diese Weise kann eine Hin-und-Her-Verfahrbewegung des Führungswagens 40 entlang der Führungsbahn linearmotorisch angetrieben realisiert werden.

Wie aus den Figuren 1 bis 3 ersichtlich, ist eine Größe des Abstandes der Führungsschienen 31 so gewählt, dass in dem Abstand eine Anzahl von fünf in der Schneidposition befindlichen Schneidmessern 3 angeordnet werden können. Eine Breite des Führungswagens 40 ist so gewählt, dass in dem Gehäuse 40a des Führungswagens 40 fünf identische Abziehmeißel 45 nebeneinander angeordnet aufgenommen sind. Die fünf Abziehmeißel 45 sind an einer gemeinsamen dritten Schwenkachse S3, die sich quer zu der von den Führungsschlitzen 32 definierten Führungsbahn bzw. parallel zu den Drehachsen der Führungsräder 42 erstreckt, schwenkbar am Gehäuse 40a des Führungswagens 40 gelagert.

Selbstverständlich kann eine erfindungsgemäße Messerschärfeinrichtung auch zum gleichzeitigen Schärfen einer anderen Anzahl von Schneidmessern ausgerichtet werden. Dazu müssen lediglich der Abstand zwischen den Führungsschienen 31 sowie die Anzahl der Abziehmeißel 45 angepasst werden.

An einem der dritten Schwenkachse S3 abgewandten Längsendabschnitt jedes Abziehmeißels 45 ist eine Hartmetall-Wendeschneidplatte 46 lösbar angebracht, wobei die Hartmetall-Wendeschneidplatte 46 eine Abziehschneide 46a des Abziehmeißels 45 definiert. Jeder Abziehmeißel 45 ist mit einer vorbestimmten Vorspannkraft in eine Arbeitsposition zum Schneideingriff seiner Abziehschneide 46a mit der Messerschneide 3a eines positionsmäßig korrespondierenden der Schneidmesser 3 vorgespannt und aus der Arbeitsposition gegen die Vorspannkraft in eine Ausweichposition in Richtung weg von dem Leitelement 2 um die dritte Schwenkachse S3 verschwenkbar, so dass z.B. bei zu starkem Schneideingriff bzw. Überlast ein Ausmaß des Schneideingriffs der Abziehschneide 46a des Abziehmeißels 45 reduzierbar ist.

Um die Vorspannkraft bereitzustellen, ist zwischen einem Lagerbock 40b des Gehäuses 40a des Führungswagens 40 und einer von der Abziehschneide 46a abgewandten Rückseite jedes Abziehmeißels 45 eine Druckfeder 47 vorsehen, welche den Abziehmeißel 45 mit ihrer Federkraft als Vorspannkraft in die Arbeitsposition zum Leitelement 2 hin drückt. In diesem Zusammenhang ist zu bemerken, dass sich gemäß den Darstellungen der Figuren 1 bis 3 zum Zwecke der Veranschaulichung die beiden äußeren Abziehmeißel 45 der fünf Abziehmeißel 45 in der Arbeitsposition und die drei innenliegenden Abziehmeißel 45 der fünf Abziehmeißel 45 in der Ausweichposition befinden.

Obwohl in den Figuren 1 bis 3 nicht dargestellt, weist die Messerschärfeinrichtung 10 außerdem eine Verfahreinrichtung auf, welche an einem nicht gezeigten Rahmen der Erntemaschine benachbart zum Schneidwerk 1 angebracht ist und welche mit den Führungsschienen 31 der Führungsschienenanordnung 30 der Führungseinrichtung 20 gekuppelt ist, so dass die Führungsschienenanordnung 30 mit dem daran geführten Führungswagen 40 und den Abziehmeißeln 45 in die geöffnete Schneidmulde des Schneidwerks 1 hineingefahren und wieder hinausgefahren werden kann.

Dabei ist die Führungsschienenanordnung 30 der Messerschärfeinrichtung 10 so an der Verfahreinrichtung aufgenommen, dass die Führungsschienenanordnung 30 im Schneidwerk 1 in definierter Position zu den fünf in der Arbeitsposition befindlichen Schneidmessern 3 angeordnet werden kann, um die Messerschneiden 3a dieser Schneidmesser 3 durch entlang der Führungsschlitze 32 Hin-und-Her-Verfahren des Führungswagens 40 und damit entlang der Längskontur der Messerschneiden 3a Hin-und-Her-Verfahren der Abziehschneiden 46a der Abziehmeißel 45 zu schärfen.

Die Verfahreinrichtung ist außerdem so eingerichtet, dass die Führungsschienenanordnung 30 mit dem daran geführten Führungswagen 40 und den Abziehmeißeln 45 entlang der Längsrichtung LR der Fördertrommel verfahrbar ist. Dadurch können nach Abschluss des Schärfprozesses an einer ersten Anzahl von fünf Schneidmessern 3 weitere Anzahlen von jeweils fünf Schneidmessern 3 einem Schärfprozess unterzogen werden, bis alle Schneidmesser 3 des Schneidwerks 1 geschärft wurden.

Mögliche konstruktive Details für eine solche Verfahreinrichtung können z.B. aus DE 20 2004 004 133 U1 entnommen und an die Messerschärfeinrichtung 10 und das Schneidwerk 1 gemäß der Erfindung angepasst werden.

Bei Schneideingriff an der Messerschneide 3a eines Schneidmessers 3 ist die Abziehschneide 46a des Abziehmeißels 45 an der Messerschneide 3a in etwa in einem Winkel von 90 Grad zu einer in einer Schneidkante 3c der Messerschneide 3a endenden seitlichen Schneidenfläche 3b der Messerschneide 3a ausgerichtet, so dass die Abziehschneide 46a beim Hin-und-Her-Verfahren gewissermaßen schabend über die seitliche Schneidenfläche 3b geführt wird. Dabei schließt die nicht sichtbare - in die Bildebene hineinverlaufende - Freifläche der Abziehschneide 46a einen Winkel mit der Oberfläche der Messerschneide 3a ein, so dass sich ein sogenannter Freiwinkel ergibt. Dadurch wird die Abziehschneide 46a günstiger belastet und ein Ausbrechen der Schneide verhindert. Statt dem oben genannten Anstellwinkel von 90 Grad, bei dem der Grat von der Messerschneide 3a abgeschabt wird, kann die Abziehschneide 46a auch unter einem Winkel an die Messerschneide 3a angestellt werden, der einen positiven Spanwinkel bildet, so dass der Grat schneidend abgetrennt wird.

Mit der erfindungsgemäßen Messerschärfeinrichtung 10 sind die Abziehschneiden 46a der Abziehmeißel 45 somit jeweils seitlich an der Messerschneide 3a eines positionsmäßig korrespondierenden der Schneidmessers 3 in Schneideingriff bringbar und können unter Nachvollziehen der Längskontur der jeweiligen Messerschneide 3a mittels motorisch angetriebenen Verfahrens des Führungswagens 40 hin-und-her-verfahren werden.

Genauer wird - nach definierter Positionierung der Führungsschienenanordnung 30 durch die Verfahreinrichtung - der Führungswagen 40 angetrieben durch den Fluidzylinder 51 abwechselnd in seine in den Figuren 1 und 2 gezeigte untere Verfahrposition und in seine in Fig. 3 gezeigte obere Verfahrposition gefahren. Dabei werden die Abziehschneiden 46a der Abziehmeißel 45 in Schneideingriff an den Messerschneiden 3a der Schneidmesser 3 an der Längskontur der Messerschneiden 3a entlang geführt, wobei die Abziehschneiden 46a durch Entfernen eines durch Umbiegen der Schneidkante 3c zur seitlichen Schneidfläche 3b hin seitlich an den Messerschneiden 3a jeweils entstandenen Grates die Messerschneiden 3a abziehen und damit nachschärfen.

Dadurch, dass sich die Schneidmesser 3 in der hier beschriebenen Ausführungsform noch im Schneidwerk 1 befinden und somit nur ihr vorderer Teil durch das Leitelement 2 hindurch vorsteht, wird bei dem hier beschriebenen z.B. im Feldeinsatz durchführbaren Schärfprozess nur der vordere Teil der Schneidmesser 3 nachgeschärft, was eine Zeiteinsparung mit sich bringt. Dadurch, dass an dem Führungswagen 40 mehrere Abziehmeißel 45 gelagert sind, können außerdem gleichzeitig mehrere Schneidmesser 3 nachgeschärft werden, was eine zusätzliche Zeiteinsparung mit sich bringt.

In Verbindung mit allen vorher beschriebenen Ausführungsbeispielen kann zusätzlich eine Einrichtung zum Abtasten der Schneidenkontur - wie beispielsweise ein Kopierbolzen - vorgesehen werden, welche die erfindungsgemäßen Abziehschneiden entsprechend der Schneidenkontur positioniert. Dadurch werden auch die Schneidmesser des Schneidwerks von einer Abziehschneide erfasst, die aufgrund des Verschleißes schon weiter zurückgesetzt sind.

Weiterhin kann in Verbindung mit allen vorher beschriebenen Ausführungsbeispielen eine Einrichtung zum Beseitigen der anfallenden Späne vorgesehen werden. Solche Einrichtungen können die Späne beispielsweise mittels Druckluft in einen Sammelbehälter blasen oder mittels Elektromagneten sammeln und über einem Auffangbehälter fallen lassen.

Ein wesentlicher Kern der Erfindung ist darin zu sehen, dass zum Nachschärfen der Messerschneiden eines Schneidwerks einer Erntemaschine eine geometrisch bestimmte Schneide dazu benutzt wird, einen abnutzungsbedingten Grataufbau an den Messerschneiden abzutrennen. Dabei wird die geometrisch bestimmte Schneide mit einer im Wesentlichen geradlinigen Bewegung an der Schneidkante einer Messerschneide entlang geführt, wobei der Grat durch Schaben oder Schneiden abgetrennt wird. Die Geschwindigkeit der geradlinigen Bewegung kann dabei deutlich unter der Schnittgeschwindigkeit einer Schleifscheibe bleiben, wie sie gemäß dem Stand der Technik zum Nachschärfen vorgesehen ist. Dadurch erhitzt sich eine Messerschneide während einem erfindungsgemäßen Nachschärfen nur unwesentlich und es besteht keine Gefahr eines Überhitzens und Ausglühens der Messerschneiden. Deshalb besteht keine Brandgefahr - insbesondere auch deshalb, weil beim erfindungsgemäßen Schärfen kein Funkenflug entsteht.

### Bezugszeichenliste

- 1: Schneidwerk
- 2: Leitelement
- 2a: Durchgangschlitz(e)
- 3: Schneidmesser
- 3a: Messerschneide(n)
- 10: Messerschärfeinrichtung
- 20: Führungseinrichtung
- 30: Führungsschienenanordnung
- 31: Führungsschiene(n)
- 32: Führungsschlitz(e)
- 40: Führungswagen
- 40a: Gehäuse
- 40b: Lagerbock
- 41: Eingriffseinheit
- 42: Führungsräder
- 45: Abziehmittel/Abziehmeißel
- 46: Hartmetall-Wendeschneidplatte
- 46a: Abziehschneide
- 47: Druckfeder
- 50: Antriebseinrichtung
- 51: Fluidzylinder
- 52: Kolbenstange
- S1: Schwenkachse
- S2: Schwenkachse
- S3: Schwenkachse
- LR: Längsrichtung

## Patentansprüche

1. Messerschärfeinrichtung (10) für ein Schneidwerk (1) einer landwirtschaftlichen Erntemaschine, wobei das Schneidwerk (1) mindestens ein längliches Schneidmesser (3) mit einer sich längs daran in einer bestimmten Längskontur erstreckenden Messerschneide (3a) hat, und wobei die Messerschärfeinrichtung (10) aufweist:
mindestens ein Abziehmittel (45), und
eine Führungseinrichtung (20), an welcher das mindestens eine Abziehmittel (45) geführt ist, so dass eine Abziehschneide (46a) des Abziehmittels (45) seitlich an der Messerschneide (3a) des Schneidmessers (3) in Eingriff bringbar ist und unter Nachvollziehen der Längskontur der Messerschneide (3a) verfahrbar ist, **dadurch gekennzeichnet, dass** das Abziehmittel ein Abziehmeißel (45) ist.

2. Messerschärfeinrichtung (10) gemäß Anspruch 1, wobei die Führungseinrichtung (20) eingerichtet ist, so dass sie in dem Schneidwerk (1) in definierter Position zu dem mindestens einen Schneidmesser (3) angeordnet werden kann, um die Messerschneide (3a) des Schneidmessers (3) durch entlang deren Längskontur Verfahren der Abziehschneide (46a) zu schärfen.

3. Messerschärfeinrichtung (10) gemäß Anspruch 1 oder 2, wobei die Führungseinrichtung (20) eine Führungsschienenanordnung (30), die eine zu der Längskontur der Messerschneide (3a) des mindestens einen Schneidmessers (3) korrespondierende Führungsbahn definiert, und einen Führungswagen (40) aufweist, der an der Führungsschienenanordnung (30) geführt ist, so dass der Führungswagen (40) entlang der Führungsbahn hin-und-her-verfahrbar ist, und wobei das mindestens eine Abziehmittel (45) an dem Führungswagen (40) gelagert ist.

4. Messerschärfeinrichtung (10) gemäß Anspruch 3, wobei die Führungsschienenanordnung (30) zwei Führungsschienen (31) aufweist, die mit vorbestimmtem Abstand voneinander zueinander ausgerichtet angeordnet sind und an denen jeweils eine die Führungsbahn wiedergebende Führungskontur vorgesehen ist, und wobei der Führungswagen (40) zwischen den Führungsschienen (31) angeordnet ist und an jeder von zwei jeweils einer der Führungsschienen (31) zugewandten Seiten dessen eine Eingriffseinheit (41) aufweist, die mit der angrenzenden jeweiligen Führungskontur zur Bewegungsführung in Eingriff steht.

5. Messerschärfeinrichtung (10) gemäß Anspruch 4, wobei die Eingriffseinheiten (41) jeweils zwei Eingriffselemente aufweisen, die so angeordnet sind, dass sie entlang der Führungskontur mit vorbestimmtem Abstand voneinander jeweils mit der Führungskontur in Eingriff stehen.

6. Messerschärfeinrichtung (10) gemäß Anspruch 5, wobei die Eingriffselemente in Form von drehbar am Führungswagen (40) gelagerten jeweiligen Führungsrädern (42) ausgebildet sind, und wobei die Führungskontur jeder Führungsschiene (31) einen Führungsschlitz (32) aufweist, in den die Führungsräder (42) zur Bewegungsführung eingreifen.

7. Messerschärfeinrichtung (10) gemäß einem der Ansprüche 3 bis 6, wobei das mindestens eine Abziehmittel (45) beweglich an dem Führungswagen (40) gelagert mit einer vorbestimmten Vorspannkraft in eine Arbeitsposition zum Schneideingriff seiner Abziehschneide (46a) mit der Messerschneide (3a) des mindestens einen Schneidmessers (3) vorgespannt ist, und wobei das mindestens eine Abziehmittel (45) aus der Arbeitsposition gegen die Vorspannkraft in eine Ausweichposition verlagerbar ist, so dass ein Ausmaß des Schneideingriffs der Abziehschneide (46a) des Abziehmittels (45) reduzierbar ist.

8. Messerschärfeinrichtung (10) gemäß Anspruch 7, wobei das mindestens eine Abziehmittel (45) um eine sich quer zu der Führungsbahn erstreckende Schwenkachse (S3) schwenkbar an dem Führungswagen (40) gelagert ist, so dass er aus der Arbeitsposition gegen die Vorspannkraft in die Ausweichposition verlagerbar ist.

9. Messerschärfeinrichtung (10) gemäß einem der Ansprüche 1 bis 8, wobei die Abziehschneide (46a) des mindestens einen Abziehmittels (45) von einer Hartmetall-Wendeschneidplatte oder einer Oxidkeramik-Wendeschneidplatte (46) gebildet ist, die lösbar am Abziehmeißel (45) angebracht ist.

10. Messerschärfeinrichtung (10) gemäß einem der Ansprüche 1 bis 9, mit einer Antriebseinrichtung (50), die eingerichtet ist, eine Verfahrbewegung des mindestens einen Abziehmittels (45) motorisch anzutreiben, um dessen Abziehschneide (46a) seitlich an der Messerschneide (3a) des Schneidmessers (3) in Schneideingriff unter Nachvollziehen der Längskontur der Messerschneide (3a) hin und her zu verfahren.

11. Landwirtschaftliche Erntemaschine mit einem Schneidwerk, insbesondere ein Ladewagen oder eine Ballenpresse, **gekennzeichnet durch** eine Messerschärfeinrichtung gemäß einem der vorrangehenden Ansprüche.

## Claims

1. Blade sharpening device (10) for a cutterbar (1) of an agricultural harvester, wherein the cutterbar (1) has at least one oblong cutting blade (3) with a blade edge (3a) extending along it in a specified longitudinal contour, and wherein the blade sharpening device (10) has:
at least one whetting means (45), and
a guide device (20) on which the at least one whetting means (45) is guided, with the result that a whetting edge (46a) of the whetting means (45) can be brought laterally into engagement on the blade edge (3a) of the cutting blade (3) and is movable following the longitudinal contour of the blade edge (3a), **characterized in that** the whetting means is a whetting tool (45).

2. Blade sharpening device (10) according to claim 1, wherein the guide device (20) is set up such that it can be arranged in the cutterbar (1) in defined position relative to the at least one cutting blade (3) in order to sharpen the blade edge (3a) of the cutting blade (3) by moving the whetting edge (46a) along its longitudinal contour.

3. Blade sharpening device (10) according to claim 1 or 2, wherein the guide device (20) has a guide rail arrangement (30) which defines a guideway corresponding to the longitudinal contour of the blade edge (3a) of the at least one cutting blade (3), and a guide carriage (40) which is guided on the guide rail arrangement (30), with the result that the guide carriage (40) can be moved back and forth along the guideway, and wherein the at least one whetting means (45) is mounted on the guide carriage (40).

4. Blade sharpening device (10) according to claim 3, wherein the guide rail arrangement (30) has two guide rails (31) which are arranged aligned relative to each other at a predefined distance from each other, and on each of which is provided a guide contour reproducing the guideway, and wherein the guide carriage (40) is arranged between the guide rails (31) and has on each of its two sides, each facing one of the guide rails (31), an engagement unit (41) which engages with the adjacent respective guide contour for guiding the movement.

5. Blade sharpening device (10) according to claim 4, wherein the engagement units (41) each have two engagement elements which are arranged such that they each engage with the guide contour at a predefined distance from each other along the guide contour.

6. Blade sharpening device (10) according to claim 5, wherein the engagement elements are formed in the form of respective guide wheels (42) rotatably mounted on the guide carriage (40), and wherein the guide contour of each guide rail (31) has a guide slot (32) into which the guide wheels (42) engage for guiding the movement.

7. Blade sharpening device (10) according to one of claims 3 to 6, wherein the at least one whetting means (45) movably mounted on the guide carriage (40) is preloaded with a predefined preload force into a working position for cutting engagement of its whetting edge (46a) with the blade edge (3a) of the at least one cutting blade (3), and wherein the at least one whetting means (45) can be displaced against the preload force out of the working position into an alternate position, with the result that a extentof the cutting engagement of the whetting edge (46a) of the whetting means (45) can be reduced.

8. Blade sharpening device (10) according to claim 7, wherein the at least one whetting means (45) is mounted on the guide carriage (40) swivellable about a swivel axis (S3) extending transverse to the guideway, with the result that it can be displaced against the preload force out of the working position into the alternate position.

9. Blade sharpening device (10) according to one of claims 1 to 8, wherein the whetting edge (46a) of the at least one whetting means (45) is formed from a carbide indexable insert or an oxide-ceramic indexable insert (46) which is removably attached to the whetting tool (45).

10. Blade sharpening device (10) according to one of claims 1 to 9, with a drive device (50) which is set up to power a travelling movement of the at least one whetting means (45) in order to move its whetting edge (46a) laterally back and forth on the blade edge (3a) of the cutting blade (3) in cutting engagement following the longitudinal contour of the blade edge (3a).

11. Agricultural harvester with a cutterbar, in particular a self-loading forage wagon or a baler, **characterized by** a blade sharpening device according to one of the preceding claims.

## Revendications

1. Dispositif aiguiseur de couteau (10) pour un mécanisme de coupe (1) d'une machine de récolte agricole, le mécanisme de coupe (1) présentant au moins un couteau (3) allongé, doté d'une lame de couteau (3a) s'étendant à partir de celui-ci, dans le sens longitudinal, suivant un contour longitudinal défini, et le dispositif aiguiseur de couteau (10) présentant :
au moins un moyen d'affûtage (45), et
un dispositif de guidage (20) sur lequel est guidé le moyen d'affûtage (45), au nombre d'au moins un, de sorte qu'une lame d'affûtage (46a) du moyen d'affûtage (45) peut être amenée en prise latéralement sur la lame (3a) du couteau (3) et peut être déplacée en suivant le contour longitudinal de la lame de couteau (3a), **caractérisé en ce que** le moyen d'affûtage est un ciseau d'affûtage (45).

2. Dispositif aiguiseur de couteau (10) selon la revendication 1, dans lequel le dispositif de guidage (20) est conçu de manière à pouvoir être disposé dans le mécanisme de coupe (1), dans une position définie par rapport au couteau (3), au nombre d'au moins un, afin d'aiguiser la lame (3a) du couteau (3) en déplaçant la lame d'affûtage (46a) le long du contour longitudinal de celle-ci.

3. Dispositif aiguiseur de couteau (10) selon la revendication 1 ou 2, dans lequel le dispositif de guidage (20) présente un agencement de rails de guidage (30), qui définit une voie de guidage correspondant au contour longitudinal de la lame (3a) du couteau (3), au nombre d'au moins un, et un chariot de guidage (40) qui est guidé sur l'agencement de rails de guidage (30), de sorte que le chariot de guidage (40) peut être déplacé suivant un mouvement de va-et-vient le long de la voie de guidage, et dans lequel le moyen d'affûtage (45), au nombre d'au moins un, est monté sur le chariot de guidage (40).

4. Dispositif aiguiseur de couteau (10) selon la revendication 3, dans lequel l'agencement de rails de guidage (30) présente deux rails de guidage (31) qui sont disposés à une distance réciproque prédéterminée, en étant alignés l'un par rapport à l'autre, et sur lesquels il est prévu respectivement un contour de guidage reproduisant la voie de guidage, et dans lequel le chariot de guidage (40) est disposé entre les rails de guidage (31) et présente, sur chaque côté parmi deux côtés tournés respectivement vers un des rails de guidage (31), une unité d'engagement (41) qui est en prise avec le contour de guidage respectif adjacent, en vue du guidage du mouvement.

5. Dispositif aiguiseur de couteau (10) selon la revendication 4, dans lequel les unités d'engagement (41) présentent chacune deux éléments d'engagement qui sont disposés de manière à ce qu'ils soient en prise respectivement avec le contour de guidage, le long du contour de guidage, à une distance prédéterminée l'un par rapport à l'autre.

6. Dispositif aiguiseur de couteau (10) selon la revendication 5, dans lequel les éléments d'engagement sont réalisés sous forme de galets de guidage (42) respectifs, montés avec possibilité de rotation sur le chariot de guidage (40), et dans lequel le contour de guidage de chaque rail de guidage (31) présente une fente de guidage (32) dans laquelle s'engagent les galets de guidage (42), en vue du guidage du mouvement.

7. Dispositif aiguiseur de couteau (10) selon une des revendications 3 à 6, dans lequel le moyen d'affûtage (45), au nombre d'au moins un, est monté de façon mobile sur le chariot de guidage (40), avec une force de précontrainte prédéterminée, en direction d'une position de travail destinée à l'engagement de coupe de sa lame d'affûtage (46a) avec la lame (3a) du couteau (3), au nombre d'au moins un, et dans lequel le moyen d'affûtage (45), au nombre d'au moins un, peut être déplacé de la position de travail dans une position de dégagement, à l'encontre de la force de précontrainte, de manière à ce qu'un degré de l'engagement de coupe de la lame d'affûtage (46a) du moyen d'affûtage (45) puisse être réduit.

8. Dispositif aiguiseur de couteau (10) selon la revendication 7, dans lequel le moyen d'affûtage (45), au nombre d'au moins un, est monté sur le chariot de guidage (40) avec possibilité de pivotement autour d'un axe de pivotement (S3) s'étendant transversalement à la voie de guidage, de sorte qu'il peut être déplacé de la position de travail dans la position de dégagement, à l'encontre de la force de précontrainte.

9. Dispositif aiguiseur de couteau (10) selon une des revendications 1 à 8, dans lequel la lame d'affûtage (46a) du moyen d'affûtage (45), au nombre d'au moins un, est constituée d'une plaquette de coupe amovible en métal dur ou d'une plaquette de coupe amovible en céramique oxydée (46) qui est fixée de façon démontable au ciseau d'affûtage (45).

10. Dispositif aiguiseur de couteau (10) selon une des revendications 1 à 9, comprenant un dispositif d'entraînement (50) qui est conçu pour entraîner par moteur un mouvement de déplacement du moyen d'affûtage (45), au nombre d'au moins un, afin de déplacer la lame d'affûtage (46a) de celui-ci, selon un mouvement de va-et-vient, sur le côté de la lame (3a) du couteau (3), dans un engagement de coupe, en suivant le contour longitudinal de la lame de couteau (3a).

11. Machine de récolte agricole comprenant un mécanisme de coupe, en particulier une remorque autochargeuse ou une presse à balles, **caractérisée en ce qu'**elle est dotée d'un dispositif aiguiseur de couteau selon une des revendications précédentes.
